# EUROPEAN PATENT APPLICATION

(11) **EP 4 831 842 A1**
(43) Date of publication of application: **28.10.2026**
(21) Application number: 25171741.9
(22) Date of filing: 22.04.2025
(51) Int. Cl.: G06F 21/12, G06F 21/14, G06F 21/51, G06F 21/64

(54) **METHOD FOR INTEGRITY CHECK OF SOFTWARE DATA**

(71) Applicant: Siemens Aktiengesellschaft, 80333 München (DE)
(72) Inventor: Zwanzger, Johannes, 85579 Neubiberg (DE)
(74) Representative: Siemens Patent Attorneys

(57) **Abstract**

The present disclosure provides a method for integrity check of software data using a first, obfuscated, and a second, non-obfuscated, check application that jointly provide a check value of a part of the software data. The first and second check applications alternatingly update and pass over an intermediate check value towards a final check value. The final check value is compared with a reference check value, and in case the final check value matches the reference check value, an integrity of the software data is confirmed. The method enables efficient integrity verification while minimizing attack surface through the use of obfuscated and non-obfuscated components.

## Description

The invention relates to methods for integrity checking of software data, and more particularly to a method for efficient integrity verification using obfuscated and non-obfuscated check applications.

The integrity of software code and data plays a crucial role in ensuring the security and proper functioning of computer systems, particularly computer systems for industrial applications. As software applications become increasingly complex and widespread, protecting against unauthorized modifications or tampering has become a significant challenge. Integrity checks aim to verify that code and data have not been altered from their original, intended state.

One common approach for verifying integrity involves calculating a cryptographic hash value over the relevant code and data. This hash value serves as a digital fingerprint that can be compared against a known good reference value. Any modifications to the protected content will result in a different hash value, allowing detection of tampering attempts.

However, implementing robust integrity checks presents several technical difficulties. Particularly, the integrity verification mechanism itself may be vulnerable to manipulation by sophisticated attackers with access to the system. Simply storing reference hash values or implementing straightforward comparison logic provides a potential attack surface.

Obfuscation techniques aim to make code more difficult for humans to understand and modify, providing an additional layer of protection. However, heavily obfuscating integrity check implementations can significantly increase computational overhead. Balancing security, performance, and resource utilization remains an ongoing challenge when designing effective integrity verification systems.

It has been appreciated that a method is needed that overcomes one or more of these problems.

It is therefore the object of the present invention to provide a method for integrity check of software data that overcomes the problem of efficiently verifying integrity while minimizing attack surface for manipulation.

This object of the present invention is solved with a method for integrity check of software data with the features contained in claim 1. Advantageous aspects of the invention are contained in the subsequent dependent claims, the following description and the drawing.

In a first aspect, a method for integrity check of software data is provided. The method includes using a first, obfuscated, and a second, non-obfuscated, check application, that jointly provide a check value of a part of the software data, wherein the first and the second check application alternatingly update and pass over an intermediate check value towards a final check value, and wherein the final check value is compared with a reference check value and in case the final check value matches the reference check value, an integrity of the software data is confirmed.

This method provides an efficient way to verify the integrity of software data while minimizing the attack surface for potential manipulation. By utilizing both obfuscated and non-obfuscated check applications, the method combines the security benefits of obfuscation with the performance advantages of non-obfuscated code.

In another advantageous aspect of the method according to the invention, the final check value is compared with the reference check value within the first check application.

This aspect enhances security by performing the critical comparison step within the obfuscated application, making it more difficult for an attacker to manipulate the comparison process.

In another advantageous aspect of the method according to the invention, the second check application calculates the intermediate check values with at least half of the part of the software data, preferably at least 90 percent of the software data, advantageously at least 99 percent of the software data and ideally at least 99.9 per cent of the part of the software data.

This aspect optimizes performance by allowing the majority of the integrity check calculations to be performed by the faster, non-obfuscated application while still maintaining a high level of security.

In another advantageous aspect of the method according to the invention, the second check application calculates the intermediate check values with at least an equally large part of the software data compared to the first check application, preferably with an at least nine-times larger part of the software data, advantageously with an at least 99-times larger part of the software data and ideally with an at least 999-times larger part of the software data.

This aspect further enhances the performance benefits of the method by allocating a significantly larger portion of the integrity check calculations to the non-obfuscated application.

In another advantageous aspect of the method according to the invention, the check value is a hash value.

Utilizing hash values provides a robust and efficient means of verifying data integrity, as hash functions are designed to produce unique outputs for different inputs and are computationally efficient.

In another advantageous aspect of the method according to the invention, the pass over is realized with an obfuscated interface.

This aspect adds an additional layer of security by making it more difficult for an attacker to intercept or manipulate the intermediate check values as they are passed between the obfuscated and non-obfuscated applications.

In another advantageous aspect of the method according to the invention, an enabling function depends on the final check value and the enabling function enables one, more or all of the functionality of the software that is implemented with the software data.

In this aspect of the invention, the enabling function may deliver a return value, that is not only a binary value like yes or no, but rather a multi-digit number, that for an attacker is difficult to guess.

The functionality of the software may depend on the correct return value and malfunction in case the return value is incorrect.

Either, the enabling function may be used as a check, whether the final check value matches the reference check value, and an integrity of the software data is confirmed or not. However, dependent on the risk analysis, alternatively or additionally, also a digital or binary check may be sufficient.

Ideally, both a simple, digital check, whether the final check value and the reference check value match, is performed and at the same time, the enabling function is used. In this case, the integrity check of the software data may be halted immediately in case the binary check fails. However, in case the software is manipulated, and the binary check erroneously does not fail, the enabling function would still return incorrect return values, which are difficult for an attacker to correct to the intended return values. Thus, the software would still malfunction and thus still be resilient towards attacks.

The return value could be, as an example, a constant, which is added to the difference of the final check value and the reference check value. In this case, the match of the final check value and the reference check value is difficult to examine for attackers without additional knowledge.

This aspect ties the integrity check directly to the functionality of the software, ensuring that the software will only operate as intended if its integrity is verified, thereby providing a strong deterrent against tampering.

In another advantageous aspect of the method according to the invention, the software data comprise or are part of a license file.

This aspect allows the method to be applied specifically to license verification, enhancing the security of software licensing mechanisms.

In another advantageous aspect of the method according to the invention, the software data comprise or are part of an application file, particularly an industrial and/or OT application file.

This aspect extends the applicability of the method to critical industrial and operational technology applications, where data integrity is of utmost importance.

In a second aspect, a method for executing an application with software data is provided. The method includes checking the integrity of the software data with the method for integrity check of software data according to the first aspect, and wherein in case the integrity of the software data is verified, the application is run and in case the integrity of the software data is not verified, the application is not run.

This method provides a practical application of the integrity check, ensuring that only verified software is executed, thereby enhancing overall system security and reliability.

In a third aspect, a computer-program product is provided. The computer-program product comprises code that, when executed on a computer, carries out the method according to any of the previous aspects.

In the following, the invention is described in more detail with the help of the accompanying drawing:

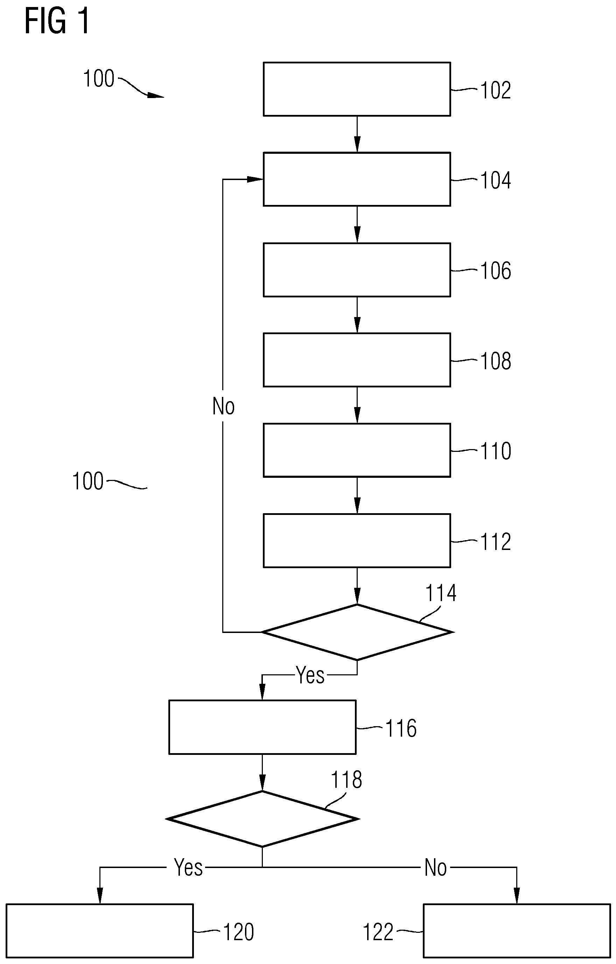

- FIG. 1: illustrates a schematic flowchart for a method of integrity checking software data using first and second check applications, according to aspects of the present invention.

Common reference numerals are used throughout the figures to indicate similar features.

The method 100 for integrity check of software data uses a first check application and a second check application. The first check application is obfuscated, while the second check application is non-obfuscated. These check applications jointly provide a check value of a part of the software data. The first check application and the second check application alternatingly update and pass over an intermediate check value towards a final check value. The check value is a hash value.

The software data comprise or are part of an application file. In other embodiments, the software data comprise or are part of a license file. In further embodiments, the software data comprise or are part of an industrial and/or OT application file.

The method 100 includes comparing the final check value with a reference check value. If the final check value matches the reference check value, the integrity of the software data is confirmed.

A method for executing an application with software data includes checking the integrity of the software data using the method 100 for integrity check of software data. If the integrity of the software data is verified, the application is run. If the integrity of the software data is not verified, the application is not run.

The method 100 can be implemented as a computer-program product. The computer-program product comprises code that, when executed on a computer, carries out the method 100.

The method derives numbers o₁, x₁, ..., oⱼ, xⱼ, oⱼ₊₁ from an input I using a function G(I). These numbers represent the quantity of blocks to be hashed by the obfuscated (HO), first, check application and the non-obfuscated (HX), second, check application, respectively. The sum of these numbers corresponds to the total number of blocks n to be hashed in the software data CD.

Function G(I) may be based on applying a hash function to the input I. The method ensures that the oᵢ values, representing the number of blocks hashed by the obfuscated first check application, are significantly smaller than the xᵢ values, which represent the number of blocks hashed by the non-obfuscated, second, check application. This approach allows for efficient use of resources while maintaining security through obfuscation.

The method calculates the oᵢ and xᵢ values within the obfuscated, first, check application HO. To enhance security, the xᵢ values are not released to the non-obfuscated, second, check application HX all at once. Instead, the method releases the xᵢ values to the non-obfuscated check application HX in small portions. This approach helps prevent an attacker from easily determining the complete sequence of block distributions between the obfuscated and non-obfuscated check application.

By deriving the block numbers in this manner, the method creates a dynamic and input-dependent distribution of hashing tasks between the obfuscated and non-obfuscated check application. This distribution varies with each input, making it more challenging for an attacker to predict or manipulate the integrity checking process.

The method 100 implements an alternating hashing process between the first check application (HO) and the second check application (HX). FIG. 1 illustrates a flowchart of the method 100 for integrity check of software data.

The method 100 begins with a step 104 where the first check application processes a part of the software data. In a step 106, the first check application updates an intermediate check value based on the processed part of the software data.

Following the processing by the first check application, a step 108 involves passing the intermediate check value to the second check application. The second check application then processes a part of the software data in a step 110. In a step 112, the second check application updates the intermediate check value based on its processed part of the software data.

The second check application calculates the intermediate check values with at least an equally large part of the software data compared to the first check application. In some embodiments, which are not explicitly shown, the second check application calculates the intermediate check values with at least half of the part of the software data. In other embodiments, the second check application calculates the intermediate check values with at least 99 percent of the software data. In some cases, the second check application calculates the intermediate check values with at least 99.9 percent of the part of the software data or with an at least 99-times larger part of the software data compared to the first check application.

The method 100 includes a step 114 where a determination is made whether a final check value is reached. If the final check value is not reached, the process returns to step 104, continuing the alternating hashing between the first check application and the second check application.

The pass over of the intermediate check value between the first check application and the second check application is realized with an obfuscated interface.

The method 100 continues with a step 116 where the final check value is compared with a reference check value W. This comparison is performed within the first check application.

In a step 118, the method 100 determines if the final check value matches the reference check value W. If the final check value matches the reference check value W, a step 120 confirms the integrity of the software data. If the final check value does not match the reference check value W, a step 122 indicates that the integrity check fails. In addition, also an enabling function F(I) is calculated in the obfuscated first check application and based on the final check value. The enabling function F(I) results in correct values in case the final check value matches the reference check value. However, in case the final check value differs from the reference check value, the enabling function F(I) results in incorrect values. In case an attacker manipulates the step 120 confirming the integrity of the software data, the integrity check would, erroneously, not fail. However, the enabling function F(I) does not simply result in a binary value that may be easily manipulated, but in a rather particular choice of values, such as a multidigit number as a return value, that for attackers would be difficult to guess.

As an example, the return value of the enabling function F(I) could be a constant, that is added to the difference of the final check value and the reference check value. In case the final check value is correct, the constant is correctly returned by the enabling function F(I). However, in case the final check value and the reference check value do not match, the return value of the enabling function F(I) is incorrect. For attackers, the correct return value of the enabling function F(I) is thus difficult to guess.

The final hash calculation, comparison with the reference value W, and the calculation of the enabling function F(I) are performed in the obfuscated first check application. These operations are obfuscated together to enhance security and make it difficult for potential attackers to manipulate or bypass the integrity check process.

The enabling function F(I) is used in conjunction with the comparison of the final check value and the reference check value W. This enabling function is designed to enable one, more, or all of the functionality of the software that is implemented with the software data. The enabling function is integrated into the obfuscated portion of the integrity check process, ensuring that the software functionality is only activated when the integrity of the software data is confirmed.

The value resulting from the enabling function F(I) is crucial for all further functionalities of the software. In case the result of the enabling function F(I) is manipulated, and its value is incorrect, the functionality of the software is broken, since at later stages, the software needs to be run with the correct values of the enabling function F(I).

By combining the final hash calculation, integrity verification, and enabling of software functionality within the obfuscated first check application, the method 100 provides a robust mechanism for ensuring the integrity of software data while controlling access to the software's features based on the integrity check results.

In a variant of the method, a tweak of the hash function is incorporated into the obfuscated implementation for calculating the last oⱼ₊₁ blocks. This tweak involves a small modification to the standard definition of the hash function used in the integrity check process.

The tweak is applied within the obfuscated implementation, making it difficult for potential attackers to understand or replicate the exact hash calculation for the final blocks. This approach enhances the security of the integrity check by introducing an additional layer of complexity that is not readily apparent to those examining the non-obfuscated portions of the code.

To implement this variant, the method ensures that the number of blocks calculated with the tweaked hash function is always less than or equal to oⱼ₊₁. For example, the function G(I) may be defined such that oⱼ₊₁ is always greater than a predetermined number of blocks, such as three, assuming a sufficiently large total number of blocks n. In this case, the last three blocks of the software data may be hashed using the tweaked version of the hash function within the obfuscated implementation.

In a variant of the method, values from a random number generator are incorporated into the determination of the oᵢ and xᵢ values. This addition serves to further increase the variation in the distribution of blocks between the obfuscated and non-obfuscated parts of the integrity check process.

The random number generator produces values that are combined with the output of the function G(I) to derive the final oᵢ and xᵢ values. This combination may involve various mathematical operations, such as addition, multiplication, or more complex transformations, depending on the specific implementation.

By introducing randomness into the calculation of oᵢ and xᵢ, the method creates an additional layer of unpredictability in the alternating hashing process. This increased variation makes it more challenging for potential attackers to predict or manipulate the distribution of blocks between the obfuscated and non-obfuscated parts of the integrity check.

The random number generator may be implemented using various algorithms or hardware-based solutions, depending on the requirements of the specific application. The choice of random number generator may take into account factors such as the desired level of randomness, performance considerations, and the overall security requirements of the system.

## Claims

1. Method (100) for integrity check of software data using a first, obfuscated, and a second, non-obfuscated, check application, that jointly provide a check value of a part of the software data, wherein the first and the second check application alternatingly update and pass over an intermediate check value towards a final check value, and wherein the final check value is compared with a reference check value and in case the final check value matches the reference check value, an integrity of the software data is confirmed.

2. Method according to claim 1, wherein the final check value is compared with the reference check value within the first check application (116).

3. Method according one of the previous claims, wherein the second check application calculates the intermediate check values (112) with at least half of the part of the software data, preferably at least 90 percent of the software data, advantageously at least 99 percent of the software data and ideally at least 99.9 per cent of the part of the software data.

4. Method according to one of the previous claims, wherein the second check application calculates the intermediate check values (112) with at least an equally large part of the software data compared to the first check application, preferably with an at least nine-times larger part of the software data, advantageously with an at least 99-times larger part of the software data and ideally with an at least 999-times larger part of the software data.

5. Method according to one of the previous claims, wherein the check value is a hash value.

6. Method according to one of the previous claims, wherein the pass over (108) is realized with an obfuscated interface.

7. Method according one of the previous claims, wherein an enabling function depends on the final check value and wherein the enabling function enables one, more or all of the functionality of the software that is implemented with the software data.

8. Method according to one of the previous claims, wherein the software data comprise or are part of a license file.

9. Method according to one of the previous claims, wherein the software data comprise or are part of an application file, particularly an industrial and/or OT application file.

10. Method for executing an application with software data, wherein the integrity of the software data is checked with the method (100) for integrity check of software data according to one of the previous claims and wherein in case the integrity of the software data is verified (120), the application is run and in case the integrity of the software data is not verified (122), the application is not run.

11. Computer-program product, which comprises code that, when executed on a computer, carries out the method (100) according to one of the previous claims.
